Europäisches Patentamt

European Patent Office

Office européen des brevets

(19)

(11) Veröffentlichungsnummer: **0 290 900**

**A2**

(12) **EUROPÄISCHE PATENTANMELDUNG**

(21) Anmeldenummer: 88107007.2

(22) Anmeldetag: 02.05.88

(51) Int. Cl.⁴: **B32B 27/12 , A41D 31/02**

(30) Priorität: 09.05.87 DE 8706687 U
09.05.87 DE 8709592 U

(43) Veröffentlichungstag der Anmeldung:
17.11.88 Patentblatt 88/46

(84) Benannte Vertragsstaaten:
AT BE CH DE ES FR GB IT LI LU NL SE

(71) Anmelder: **HOECHST AKTIENGESELLSCHAFT**
**Postfach 80 03 20**
**D-6230 Frankfurt am Main 80(DE)**

(72) Erfinder: **Hessberger, Harald, Dr.**
**Pestalozzistrasse 16**
**D-6169 Nidderau-Windecken(DE)**
Erfinder: **Ihm, Herbert-Werner**
**Tizianweg 32**
**D-6500 Mainz 31(DE)**
Erfinder: **Greiser, Wolfgang**
**Am Meierskreuz 6**
**D-8902 Neusäss(DE)**
Erfinder: **Wagner, Hans,Dr.**
**Ostpreussenstrasse 7**
**D-8903 Bobingen(DE)**
Erfinder: **Zerfass, Karl-Christian**
**Römerstrasse 26**
**D-8903 Bobingen(DE)**

(54) **Schichtstoffverbund.**

(57) Es wird ein Schichtstoffverbund beschrieben, der eine Folie und einen Vliesstoff aus thermoplastischem Kunststoff umfaßt. Die kennzeichnenden Merkmale bestehen darin, daß die Folie eine siegelfähige Folie enthaltend Polyester ist und daß der Vliesstoff im wesentlichen Fasern und/oder Filamente aus Polyester enthält.

EP 0 290 900 A2

Xerox Copy Centre

## Schichtstoffverbund

Die Erfindung betrifft einen Schichtstoffverbund umfassend eine Folie und einen Vliesstoff aus thermoplastischem Kunststoff.

Verbunde enthaltend Textilgewebe und Polyesterfolie sind bereits aus der DE-OS 25 48 043 bekannt. Nach der dort beschriebenen Lehre wird die Polyesterfolie zwischen zwei Textilbahnen eingelagert, und solches Material wird zur Herstellung von in bestimmten Partien verstärkten bzw. versteiften Kleidungsstücken eingesetzt. Derartige Textilverbunde weisen jedoch den Nachteil auf, daß die Polyesterfolie leicht auf der Textilunterlage verrutscht und daher einer speziellen Oberflächenbehandlung bzw. -beschichtung bedarf.

Ein anderes Verbundmaterial ist in der DE-OS 32 22 039 beschrieben, die ein Modellflugzeug mit einer aufgeschrumpften Deckhaut betrifft. Die Deckhaut besteht aus einem Kunststoffilm und einem Faserstoff, insbesondere einem nicht gewebten Faserstoff. Dieser Verbund weist zwar eine befriedigende Haftfestigkeit der Schichten untereinander auf, besitzt jedoch keine Siegelfähigkeit, durch die der Verbund mit sich selbst in Überlappungszonen festhaftend und dicht schließend miteinander verbunden werden könnte.

Es bestand daher die Aufgabe, einen Verbund zu erstellen, der einerseits gute Haftung der Schichten untereinander gewährleistet und der andererseits auch siegelfähig ist.

Gelöst wird diese Aufgabe durch einen Schichtstoffverbund der eingangs genannten Gattung, dessen Kennzeichenmerkmale darin zu sehen sind, daß die Folie eine siegelfähige Folie enthaltend Polyester ist und daß der Vliesstoff im wesentlichen Polyesterfasern und/oder Polyesterfilamente umfaßt.

Als Polyesterfolie wird zweckmäßigerweise eine Polyethylenterephthalatfolie eingesetzt, bevorzugt eine biaxial streckorientierte und hitzefixierte Polyethylenterephthalatfolie, die wenigstens einseitig mit einer siegelfähigen Schicht überzogen ist. Polyesterfolien aus Polyethylenterephthalat haben den Vorteil, daß sie eine sehr große mechanische Festigkeit bei vergleichsweise geringer Schichtdicke aufweisen. Überdies sind sie auch noch sehr gut dimensionsstabil, wenn sie einer Hitzefixierung unterzogen worden sind.

Geeignete siegelfähige Schichten können z.B. durch Coextrusion hergestellte Schichten aus einem Copolyester enthaltend z.B. neben Terephthalsäureeinheiten auch Isophthalsäureeinheiten in der Polyesterkette sein, oder aber es wird als siegelfähige Schicht eine Polyethylenfolie oder eine Polyolefinfolie enthaltend als Hauptbestandteil Polyethylen mit der Polyesterfolie kaschiert oder durch Schmelzextrusion einer Polyethylenschmelze auf die Polyesterfolie aufextrudiert.

Unter dem Begriff Kaschieren wird im allgemeinen ein Verbinden von zwei oder mehreren Lagen gleicher oder verschiedener Materialien, z.B. Folien, Papier, Textilien, Metall, Holz usw., durch Zusammenpressen oder Walzen, eventuell unter Wärmeeinwirkung, insbesondere unter Verwendung von Klebern oder sonstigen die Haftung vermittelnden Substanzen, verstanden. Erfindungsgemäß bevorzugt ist die Polyesterfolie mit einer Polyethylenfolie mit Hilfe eines Haftklebers, bevorzugt eines lösemittelfreien Haftklebers, zweckmäßigerweise eines Zweikomponentenklebers, zusammenkaschiert.

Der Vliesstoff enthält im wesentlichen Fasern und/oder Filamente aus Polyethylenterephthalat. Erfindungsgemäß geeignete Vliesstoffe werden oft auch als Wirrvliesstoffe bezeichnet, weil sie als flächige Gebilde vorliegen, in denen eine Vielzahl unterschiedlich oder gleich langer Fasern oder Filamente ohne besondere Vorzugsrichtung, d.h. rein statistisch, übereinandergelegt sind, wobei der Zusammenhalt des Flächengebildes durch die den Fasern infolge Präparation und Kräuselung eigene Haftung und/oder Kalandrierung und/oder Bindemittel gewährleistet wird. Derartige Wirrvliesstoffe können auf verschiedene Arten hergestellt werden, nämlich mechanisch durch Kardieren oder Krempeln, aerodynamisch durch Lufttransport und Ablegen unter Ansaugung auf luftdurchlässigen Unterlagen, hydrodynamisch durch Suspension kurzstapeliger, vorwiegend synthetischer Fasern in Wasser unter Zugabe von Bindemittel, Aufbringen auf ein Sieb und Trocknen, und schließlich durch direktes Ablegen von Filamenten in Wirrlage auf ein Transportband unter einer oder mehreren Spinndüsen und anschließender Verfestigung durch Vernadeln oder Kalandrieren und/oder mit Hilfe von Bindemitteln.

Die im Rahmen des erfindungsgemäßen Schichtstoffverbundes zum Einsatz kommenden Vliesstoffe enthaltend im wesentlichen Polyesterfilamente aus Polyethylenterephthalat besitzen insbesondere den Vorteil, daß sie neben einer hervorragenden Einreißfestigkeit und Weiterreißfestigkeit auch noch eine ganz besonders hohe Dauerbeständigkeit gegen thermische und chemische Einflüsse, insbesondere auch gegen Witterungseinflüsse, aufweisen.

Der Vliesstoff aus Filamenten ist mit der Polyesterfolie in dem erfindungsgemäßen Schichtstoffverbund bevorzugt durch ein Kalandrierverfahren verbunden. Dabei werden die einzelnen Schichten in einem Walzenspalt zusammengeführt und unter Wärmeeinwirkung verpreßt. Die Wärmeeinwirkung geschieht insbesondere in einem Temperaturbereich zwischen 150 und 250°C, bevorzugt zwischen 150 und 210°C. Der bei dem Kalandrierverfahren aufzuwendende Liniendruck liegt im Bereich von 400 bis 1 200 N/cm, insbesondere im Bereich von 500 bis 800 N/cm.

Die Gesamtdicke des Schichtstoffverbundes variiert zwischen 230 und 800 μm, bevorzugt zwischen 260 und 630 μm. Der Vliesstoff weist dabei ein Flächengewicht im Bereich von 10 bis 200 g/m$^2$, bevorzugt von 20 bis 80 g/m$^2$, auf (Dicke ungefähr 200 bis 550 μm), die Polyesterfolie besitzt Schichtdicken im Bereich von 8 bis 40 μm, bevorzugt von 12 bis 25 μm, und die Dicke der Polyethylenfolie liegt im Bereich von 15 bis 100 μm, vorzugsweise von 40 bis 80 μm.

In einer weiteren erfindungsgemäß bevorzugten Ausführungsform kann der Schichtstoffverbund auch noch schwerentflammbar ausgerüstet sein. Hierzu werden sowohl der siegelfähigen Folie als auch der Vliesstoffschicht geeignete schwerentflammbare Additive zugesetzt. Geeignete Additive sind z.B. halogenhaltige, phosphorhaltige oder aluminiumhaltige Flammschutzmittel.

Der erfindungsgemäße Schichtstoffverbund eignet sich dank seiner hervorragenden mechanischen Eigenschaften und wegen seiner besonderen Dauerbeständigkeit insbesondere gegen Witterungseinflüsse und gegenüber Chemikalien für die verschiedensten Einsatzzwecke. So lassen sich beispielsweise mehrere Bahnen des erfindungsgemäßen Schichtstoffverbundes längsseits zu sehr großflächigen Gebilden miteinander verschweißen und können in dieser Form als für Chemikalien undurchlässige Untergrundfolie in Mülldeponien eingesetzt werden.

Ein anderer erfindungsgemäß besonders bevorzugter Einsatzzweck des Schichtstoffverbundes ist die Herstellung von Berufsbekleidung, insbesondere von Schutzbekleidung. Ein Schutzanzug besteht aus dem erfindungsgemäßen Schichtstoffverbund und umfaßt ein Oberteil und ein Beinbekleidungsteil, wobei jeweils die Nähte des Oberteils und des Beinbekleidungsteils durch Versiegelung des Schichtstoffverbundes dichtschließend ausgebildet sind.

Bevorzugt ist der Schutzanzug einstückig ausgebildet, wobei das Oberteil mit dem Beinbekleidungsteil in einem Versiegelungsbereich trennfest und dichtschließend verbunden ist.

Die Erfindung soll nachfolgend anhand der Figuren beispielhaft noch näher erläutert werden.

Fig. 1 zeigt einen senkrechten Schnitt durch einen erfindungsgemäßen Schichtstoffverbund in seitlicher Ansicht.

Fig. 2 zeigt einen Schutzanzug aus dem erfindungsgemäßen Schichtstoffverbund.

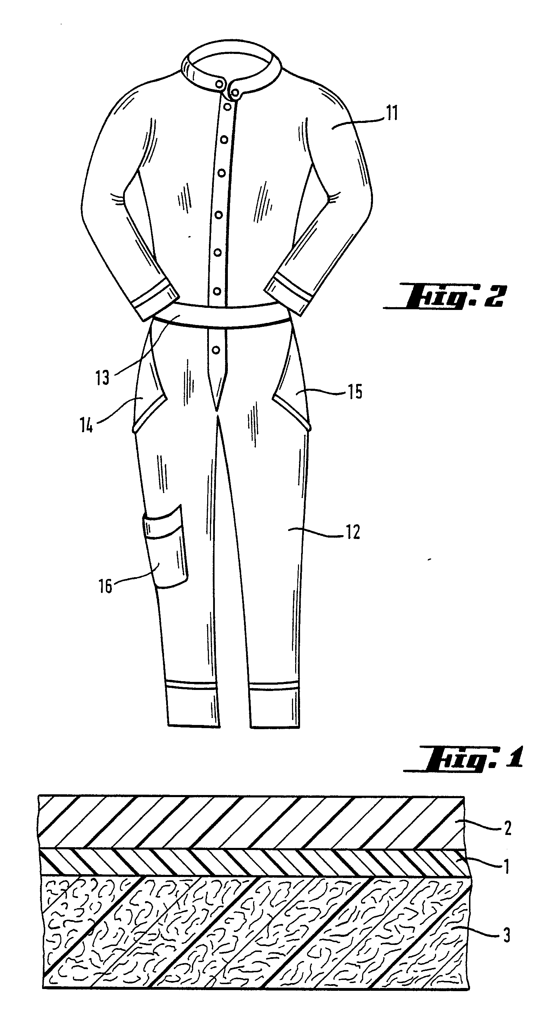

In Figur 1 ist mit Bezugszeichen die Polyesterfolie 1 dargestellt, auf deren einer Oberfläche die siegelfähige Polyethylenschicht 2 angeordnet ist. Auf der der Polyethylenfolie 2 abgewandten Oberfläche der Polyesterfolie 1 ist die Vliesschicht 3 dargestellt, innerhalb derer unregelmäßig und ohne bestimmte Vorzugsrichtung angeordnete Filamente zu erkennen sind.

Die Figur 2 zeigt einen Schutzanzug, der als Berufsbekleidung gedacht ist und der aus einem Oberteil 11 und einem Beinbekleidungsteil 12 zusammengesetzt ist. Der dargestellte Schutzanzug ist einstückig ausgebildet und besitzt einen Versiegelungsbereich 13, in dem das Oberteil 11 und das Beinbekleidungsteil 12 festhaftend und dichtschließend miteinander verbunden sind. Der dargestellte Schutzanzug besitzt im Bereich des Beinbekleidungsteils Taschen 14, 15 und 16, um gegebenenfalls bei der Arbeit benötigte kleinere Arbeitsgerätschaften oder Hilfsmittel immer griffbereit zu halten. Im Bereich der nicht dargestellten seitlichen Nähte des Beinbekleidungsteils 12 und im Bereich der ebenfalls in der Figur 2 nicht dargestellten seitlichen Nähte der Ärmel sowie der Ärmelansätze des Oberteils 11 sind die einzelnen Zuschnitte des den Schutzanzug bildenden Schichtstoffverbundes trennfest und dichtschließend durch Versiegelung miteinander verbunden.

## Ansprüche

1. Schichtstoffverbund umfassend eine Folie und einen Vliesstoff aus thermoplastischem Kunststoff, dadurch gekennzeichnet, daß die Folie eine siegelfähige Folie enthaltend Polyester ist und daß der Vliesstoff im wesentlichen Fasern und/oder Filamente aus Polyester enthält.

2. Schichtstoffverbund nach Anspruch 1, dadurch gekennzeichnet, daß als siegelfähige Polyesterfolie eine Polyethylenterephthalatfolie eingesetzt wird, bevorzugt eine biaxial streckorientierte und hitzefixierte Polyethylenterephthalatfolie, die wenigstens einseitig mit einer siegelfähigen Schicht überzogen ist.

3. Schichtstoffverbund nach Anspruch 1 oder 2, dadurch gekennzeichnet, daß als siegelfähige Schicht eine durch Coextrusion hergestellte Schicht aus einem Copolyester enthaltend neben Terephthalsäureeinheiten auch Isophthalsäureeinheiten in der Polyesterkette auf der Polyesterfolie angeordnet ist.

4. Schichtstoffverbund nach Anspruch 1 oder 2, dadurch gekennzeichnet, daß als siegelfähige Schicht eine Polyethylenfolie oder eine Polyolefinfolie enthaltend als Hauptbestandteil Polyethylen mit der Polyesterfolie kaschiert ist.

5. Schichtstoffverbund nach einem der Ansprüche 1, 2 und/oder 4, dadurch gekennzeichnet, daß die Polyester folie mit einer Polyethylenfolie mit Hilfe eines Haftklebers, bevorzugt eines lösemittelfreien Haftklebers, zweckmäßigerweise eines Zweikomponentenklebers, zusammenkaschiert ist.

6. Schichtstoffverbund nach Anspruch 1 oder 2, dadurch gekennzeichnet, daß eine Polyethylenschicht durch Schmelzextrusion auf die Polyesterfolie aufextrudiert ist.

7. Schichtstoffverbund nach einem der Ansprüche 1 bis 6, dadurch gekennzeichnet, daß der Vliesstoff im wesentlichen Filamente aus Polyethylenterephthalat enthält, die ohne besondere Vorzugsrichtung, rein statistisch übereinandergelegt sind.

8. Schichtstoffverbund nach einem der Ansprüche 1 bis 6, dadurch gekennzeichnet, daß der Vliesstoff orientiert vorliegt, wobei die Fasern bzw. die Filamente eine oder mehrere Vorzugsrichtungen aufweisen.

9. Schichtstoffverbund nach einem der Ansprüche 1 bis 8, dadurch gekennzeichnet, daß der Vliesstoff mit der Polyesterfolie durch ein Kalandrierverfahren verbunden ist.

10. Schichtstoffverbund nach einem der Ansprüche 1 bis 9, dadurch gekennzeichnet, daß die Gesamtdicke des Schichtstoffverbundes im Bereich zwischen 230 und 800 $\mu$m, bevorzugt zwischen 260 und 630 $\mu$m, liegt.

11. Schichtstoffverbund nach Anspruch 10, dadurch gekennzeichnet, daß der Vliesstoff eine Schichtdicke entsprechend 10 bis 200 g/m², bevorzugt 20 bis 80 g/m², aufweist.

12. Schichtstoffverbund nach Anspruch 10, dadurch gekennzeichnet, daß die Polyesterfolie eine Schichtdicke im Bereich von 8 bis 40 $\mu$m, bevorzugt von 12 bis 25 $\mu$m, besitzt.

13. Schichtstoffverbund nach Anspruch 10, dadurch gekennzeichnet, daß die Dicke der Polyethylenfolie im Bereich von 15 bis 100 $\mu$m, vorzugsweise von 40 bis 80 $\mu$m, liegt.

14. Schutzanzug aus einem Schichtstoffverbund gemäß einem der Ansprüche 1 bis 13 umfassend ein Oberteil (11) und ein Beinbekleidungsteil (12), dadurch gekennzeichnet, daß jeweils die Nähte des Oberteils (11) und die Nähte des Beinbekleidungsteils (12) durch Versiegelung des Schichtstoffverbundes dichtschließend ausgebildet sind.

15. Schutzanzug nach Anspruch 14, dadurch gekennzeichnet, daß der Schutzanzug einstückig ausgebildet ist, wobei das Oberteil (11) mit dem Beinbekleidungsteil (12) in einem Versiegelungsbereich (13) trennfest und dichtschließend verbunden ist.

16. Schutzanzug nach Anspruch 14 oder 15, dadurch gekennzeichnet, daß er durch geeignete Additive schwerentflammbar ausgerüstet ist.

*Fig. 2*

*Fig. 1*

HOECHST AKTIENGESELLSCHAFT
87/K 024K